# EUROPEAN PATENT APPLICATION

(11) **EP 1 959 259 A2**
(43) Date of publication of application: **20.08.2008**
(21) Application number: 08002859.0
(22) Date of filing: 15.02.2008
(51) Int. Cl.: G01N 35/10

(54) **Automatic analyzer**

(30) Priority: 19.02.2007 JP 2007037316
(71) Applicant: Hitachi High-Technologies Corporation, Tokyo 105-8717 (JP)
(72) Inventor: Watari, Shigenori, Hitachinaka-shi Ibaraki 312-8504 (JP); Kawahara, Tetsuji, Hitachinaka-shi Ibaraki 312-8504 (JP); Soma, Kunihiko, Hitachinaka-shi Ibaraki 312-8504 (JP)
(74) Representative: Strehl Schübel-Hopf & Partner

(57) **Abstract**

In an automatic analyzer, effect is reduced or prevented of a change in temperature and volume of components making up a mechanism for dispensing a reagent and a sample or a system liquid on an amount of sample and reagent per one dispensing cycle. One or a plurality of components making up the mechanism for dispensing the reagent and the sample is mounted with a sensor for measuring a temperature of the component. The dispensing mechanism further includes a sensor for measuring a temperature of the system liquid at one or a plurality of locations. Control is thereby provided, based on temperature information provided by the temperature sensor, to vary an amount of operation of a component that varies an amount of reagent and sample to be dispensed or to make the temperature of the system liquid equal to, or close to, the temperature of the component.

## Description

### BACKGROUND OF THE INVENTION

### 1. Field of the Invention

The present invention relates in general to automatic analyzers for making qualitative and quantitative analyses of biological samples such as blood or urine and, more particularly, to an automatic analyzer having a pipettor for dispensing a predetermined volume of a sample, a reagent, or the like.

### 2. Description of the Related Art

The automatic analyzer is generally used for making a quantitative analysis of components contained in a sample. It is therefore necessary to comply strictly with predetermined ratios of a sample and a reagent in terms of volume used for an analysis according to a specific item to be analyzed and a specific analyzer used. To achieve the predetermined ratios, it is necessary to dispense accurately exact amounts of the sample and the reagent to be mixed together.

A known automatic analyzer has an analyzer section that includes a mechanism for assaying components of a sample to be assayed using a reagent or the like. The analyzer section includes a vessel for mixing the sample with the reagent. Further, a mechanism for dispensing the sample and the reagent is driven by a driver that is typically a syringe, a micropump, or the like. To dispense a required amount of the sample and a required amount of the reagent, a driving amount of the driver is controlled, thereby indirectly determining a dispensing amount of sample or reagent. When a predetermined amount of a liquid is to be aspirated into a nozzle by virtue of a vacuum generated by the syringe or the micropump, the amount of the liquid aspirated can be varied by an ambient temperature. In particular, if gas is used as a pressure transmission medium, a change in temperature can vary the volume of the gas. To overcome concern about a reduced level of dispensing accuracy as affected by the changing ambient temperature, therefore, JP, A 11-509623 discloses an arrangement including a temperature sensor and the dispensing amount is calibrated based on a value detected by the temperature sensor.

### SUMMARY OF THE INVENTION

The recent trend in automatic analyzers is toward a reduction in the amount of both the sample used and the reagent required for one analysis. The former is to alleviate burden on sample providers, and the latter is to reduce environmental impact of effluent, waste, or the like and to reduce cost of reagents, or the like. Components that make up the mechanism for dispensing the reagent and sample in the known analyzer, however, make it inevitable for materials used therefor to be expanded or shrunk by temperatures thereof. A method disclosed in JP, A 11-509623 calibrates errors in the dispensing amount generated by changes in the temperature. The method does not, however, clarify as to how it can verify that calibrated results are correct.

It is an object of the present invention to provide an automatic analyzer having a pipettor offering a constant, predetermined level of dispensing accuracy.

To achieve the foregoing object, there is provided an automatic analyzer having arrangements as detailed below according to an aspect of the present invention.

In accordance with a first aspect of the present invention, there is provided an automatic analyzer including a dispensing means. Specifically, the dispensing means comprises: a nozzle for aspirating a predetermined amount of a liquid; a vacuum generating source for generating a vacuum in the nozzle to aspirate the liquid; piping which connects the vacuum generating source with the nozzle; and a liquid supply mechanism for supplying the piping with a liquid as a pressure transmitting medium. The automatic analyzer comprises: a vacuum generating source temperature measurement mechanism for measuring a temperature of the vacuum generating source; a liquid supply mechanism temperature measurement mechanism for measuring a temperature of the liquid in the liquid supply mechanism; and a control mechanism for controlling operation of the vacuum generating source based on a difference in temperature between the temperature measured with the vacuum generating source temperature measurement mechanism and the temperature measured with the liquid supply mechanism temperature measurement mechanism.

Typically, the nozzle is pipe-shaped. The nozzle may nonetheless be shaped in any other form as long as the nozzle can retain the liquid to be aspirated therewithin. The nozzle may still include a liquid level detection means for detecting if the nozzle contacts the liquid to be aspirated. As the vacuum generating source, a syringe, a diaphragm, a micropump, or the like may be used. Possible types of devices to be used as the vacuum generating source are not to be limited to the above-cited ones; rather, any type of device that can generate a driving force for aspirating a liquid in the nozzle or delivering the liquid aspirated may be used. Various types of piping may be used, including those made of a metal or a synthetic resin. Water (pure water) is typically used as the pressure transmitting medium; however, any substance that can maintain constant physical properties may instead be used. Air, which is expanded or shrunk largely by changes in temperature, is not appropriate for the pressure transmitting medium.

A temperature sensor for the temperature measurement mechanisms is not limited in number to one; rather, a plurality of temperature sensors may be provided and an average value of readings taken by the plurality of temperature sensors may be used.

The automatic analyzer according to the first aspect of the present invention may include a mechanism for controlling the temperature of the liquid supply mechanism so as to make small the difference in temperature between the temperature measured with the vacuum generating source temperature measurement mechanism and the temperature measured with the liquid supply mechanism temperature measurement mechanism. In this case, the automatic analyzer may include a heater for controlling the temperature or may use, as a heating source, constant temperature water to be supplied to a thermostatic chamber for maintaining a vessel included in the automatic analyzer at a predetermined temperature.

A tank for the pressure transmitting medium may include a stirring blade to even out the temperature of the pressure transmitting medium in the liquid supply mechanism.

The aspect of the present invention can provide an automatic analyzer that achieves a predetermined level of accuracy in dispensing a sample or a reagent even with changes in ambient temperature or even if the automatic analyzer ages over time.

### BRIEF DESCRIPTION OF THE DRAWINGS

The present invention will be described hereinafter with reference to the accompanying drawings.

Fig. 1 is a view showing schematically an example of a sample or reagent pipettor mounted in an automatic analyzer according to an embodiment of the present invention.

Fig. 2 is a view showing schematically another example of a sample or reagent pipettor mounted in an automatic analyzer according to another embodiment of the present invention.

### DETAILED DESCRIPTION OF THE PREFERRED EMBODIMENTS

### First Embodiment

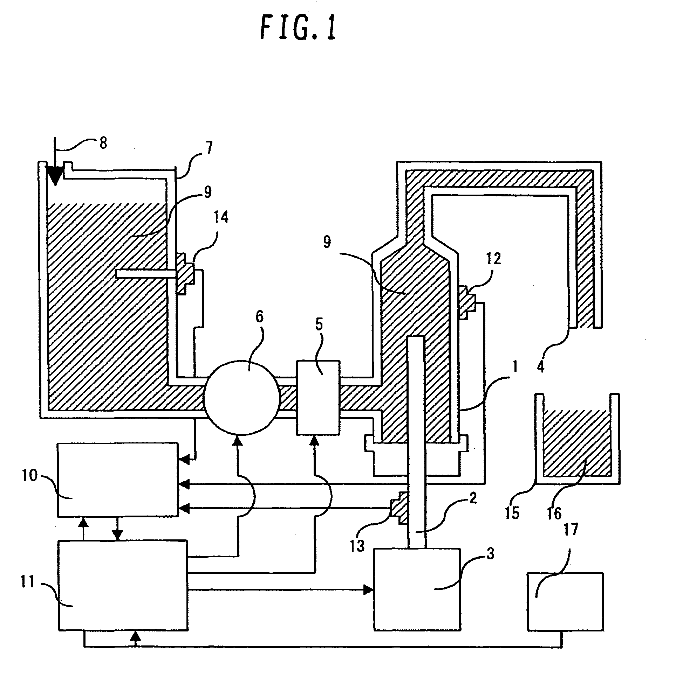

Fig. 1 is a view showing schematically an example of a reagent or sample pipettor mounted in an automatic analyzer according to a first embodiment of the present invention. Typically, a syringe 1 is filled with a system liquid 9. A plunger 2 is moved up and down with a solenoid valve 5 closed, so that a volume inside the syringe 1 is varied. This allows a nozzle 4 connected to the syringe 1 to dispense a sample 16 or a reagent 16. The sample or reagent 16 is stored by a sample or reagent cassette 15. The nozzle 4 or the sample or reagent cassette 15 is moved, so that the sample or reagent 16 and the nozzle 4 are brought into contact with each other, allowing for dispensing. The plunger 2 is driven by a plunger drive mechanism 3. As the plunger 2 is driven, a length of the plunger 2 inserted in the syringe 1 is varied. The plunger drive mechanism 3 is controlled by a control circuit 11. While transmitting and controlling signals used for actuating the plunger drive mechanism 3, the solenoid valve 5, and a pump 6, the control circuit 11 processes information fed by an A/D converter circuit 10. The A/D converter circuit 10 converts analog signals transmitted from a syringe temperature sensor 12, a plunger temperature sensor 13, and a system liquid temperature sensor 14 to corresponding digital signals. The A/D converter circuit 10 then transmits the digital signals to the control circuit 11. The pump 6, being operated with the solenoid valve 5 opened when an inside of the nozzle 4 is cleaned, sends under pressure the system liquid 9 in a system liquid tank 7 into the syringe 1. The system liquid 9 sent under pressure by the pump 6 flows via the syringe 1 past the nozzle 4, thereby cleaning the nozzle 4 before being delivered to an outside. The system liquid tank 7 is replenished by an external liquid supply 8.

While the inside of the nozzle 4 is being cleaned, the system liquid 9 moves from the system liquid tank 7 into the syringe 1. The syringe 1 and the plunger 2, which are being heated by power consumed by the plunger drive mechanism 3, have a temperature higher than that of the system liquid 9 in the system liquid tank 7. While stagnating in the syringe 1, the system liquid 9 remains in contact with an inner wall of the syringe 1 and the plunger 2. As a result, the system liquid 9 increases in temperature and volume.

If the plunger 2 is operated to carry out a dispensing sequence while the system liquid 9 increases in volume as a result of its temperature having been increased, the increase in volume of the system liquid 9 as a result of the temperature increase is added to a change in volume in the syringe 1 as a result of the operation of the plunger 2. This results in an error occurring in the dispensing amount at the nozzle 4.

The syringe temperature sensor 12 and the plunger temperature sensor 13 are therefore used to measure temperature of both or either of the syringe 1 and the plunger 2. Further, the system liquid temperature sensor 14 is used to measure temperature of the system liquid 9 in the system liquid tank 7. The temperature data is then transmitted through the A/D converter circuit 10 to the control circuit 11. The control circuit 11 uses a difference between the temperature of the syringe 1 or the plunger 2 and that of the system liquid 9 in the system liquid tank 7 to calculate the increase in volume of the system liquid 9 when the system liquid 9 is sent into the syringe 1. Or, the control circuit 11 refers to a data table prepared in advance to determine the increase in volume. In addition, the control circuit 11 corrects the amount of operation of the plunger 2 using the determined increase in volume, giving the plunger drive mechanism 3 a command for a required amount of operation. A power supply 17 provides each of different portions requiring electric power with the electric power.

### Second Embodiment

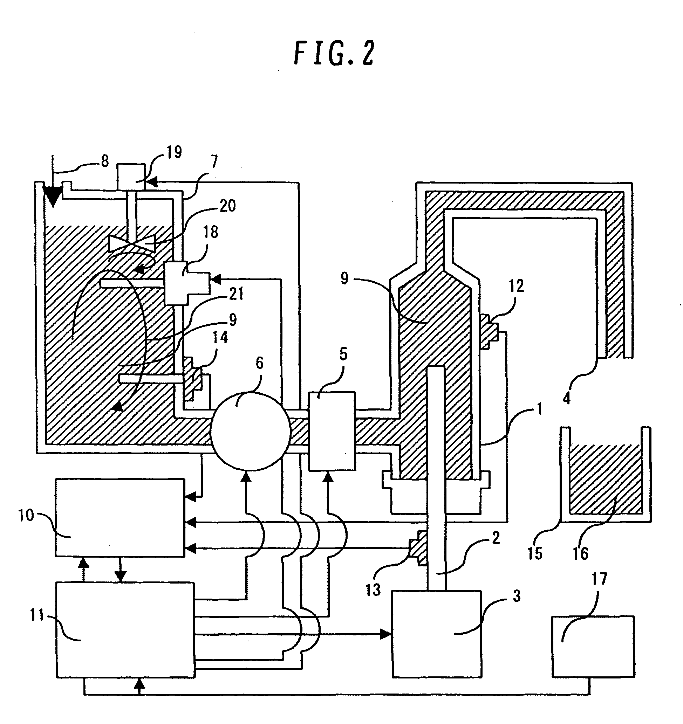

Fig. 2 is a view showing schematically another example of a sample or reagent pipettor mounted in an automatic analyzer according to another embodiment of the present invention. Typically, a syringe 1 is filled with a system liquid 9. A plunger 2 is moved up and down with a solenoid valve 5 closed, so that a volume inside the syringe 1 is varied. This allows a nozzle 4 connected to the syringe 1 to dispense a sample 16 or a reagent 16. The sample or reagent 16 is stored by a sample or reagent cassette 15. The nozzle 4 or the sample or reagent cassette 15 is moved, so that the sample or reagent 16 and the nozzle 4 are brought into contact with each other, allowing for dispensing. The plunger 2 is driven by a plunger drive mechanism 3. As the plunger 2 is driven, a length of the plunger 2 inserted in the syringe 1 is varied. The plunger drive mechanism 3 is controlled by a control circuit 11. While transmitting and controlling signals used for actuating the plunger drive mechanism 3, the solenoid valve 5, and a pump 6, the control circuit 11 processes information fed by an A/D converter circuit 10. The A/D converter circuit 10 converts analog signals transmitted from a syringe temperature sensor 12, a plunger temperature sensor 13, and a system liquid temperature sensor 14 to corresponding digital signals. The A/D converter circuit 10 then transmits the digital signals to the control circuit 11. The pump 6, being operated with the solenoid valve 5 opened when an inside of the nozzle 4 is cleaned, sends under pressure the system liquid 9 in a system liquid tank 7 into the syringe 1. The system liquid 9 sent under pressure by the pump 6 flows via the syringe 1 past the nozzle 4, thereby cleaning the nozzle 4 before being delivered to an outside. The system liquid tank 7 is replenished by an external liquid supply 8.

While the inside of the nozzle 4 is being cleaned, the system liquid 9 moves from the system liquid tank 7 into the syringe 1. The syringe 1 and the plunger 2, which are being heated by power consumed by the plunger drive mechanism 3, have a temperature higher than that of the system liquid 9 in the system liquid tank 7. While stagnating in the syringe 1, the system liquid 9 remains in contact with an inner wall of the syringe 1 and the plunger 2. As a result, the system liquid 9 increases in temperature and volume. If the plunger 2 is operated to carry out a dispensing sequence while the system liquid 9 increases in volume as a result of its temperature having been increased, the increase in volume of the system liquid 9 as a result of the temperature increase is added to a change in volume in the syringe 1 as a result of the operation of the plunger 2. This results in an error occurring in the dispensing amount at the nozzle 4.

The syringe temperature sensor 12 and the plunger temperature sensor 13 are therefore used to measure temperature of both or either of the syringe 1 and the plunger 2. Further, the system liquid temperature sensor 14 is used to measure temperature of the system liquid 9 in the system liquid tank 7. The temperature data is then transmitted through the A/D converter circuit 10 to the control circuit 11. The control circuit 11 uses a difference between the temperature of the syringe 1 or the plunger 2 and that of the system liquid 9 in the system liquid tank 7 to calculate the increase in volume of the system liquid 9 when the system liquid 9 is sent into the syringe 1. Or, the control circuit 11 refers to a data table prepared in advance to determine the increase in volume. In addition, the control circuit 11 controls a heater 18 to thereby control the temperature of the system liquid 9 in the system liquid tank 7, so that the increase in volume can be eliminated or reduced. A stirring blade 20 is rotated by a stirring mechanism motor 19, producing a stirring stream 21 in the system liquid 9 of the system liquid tank 7. The stirring blade 20 thereby functions to even out the temperature of the system liquid 9 of the system liquid tank 7 as much as possible. A power supply 17 provides each of different portions requiring electric power with the electric power.

## Claims

1. An automatic analyzer comprising:
a dispensing means, the dispensing means including a nozzle for aspirating a predetermined amount of a liquid, a vacuum generating source for generating a vacuum in the nozzle to aspirate the liquid, piping which connects the vacuum generating source with the nozzle, and a liquid supply mechanism for supplying the piping with a liquid as a pressure transmitting medium;
a vacuum generating source temperature measurement mechanism for measuring a temperature of the vacuum generating source;
a liquid supply mechanism temperature measurement mechanism for measuring a temperature of the liquid in the liquid supply mechanism; and
a control mechanism for controlling operation of the vacuum generating source based on a difference in temperature between the temperature measured with the vacuum generating source temperature measurement mechanism and the temperature measured with the liquid supply mechanism temperature measurement mechanism.

2. The automatic analyzer according to claim 1, further comprising:
a temperature control mechanism for controlling a liquid temperature in the liquid supply mechanism so as to reduce the difference in temperature.

3. The automatic analyzer according to claim 2, further comprising:
a stirring mechanism for stirring the liquid so as to even out the temperature in the liquid supply mechanism.
